# EUROPEAN PATENT SPECIFICATION

(11) **EP 4 297 145 B1**
(45) Date of publication and mention of the grant of the patent: **31.12.2025**
(21) Application number: 22887719.7
(22) Date of filing: 28.10.2022
(51) Int. Cl.: H01M 10/42, H01M 50/204, A62C 3/16, H01M 50/251, H01M 50/682

(54) **BATTERY PACK WITH IMPROVED SAFETY**
BATTERIEPACK MIT VERBESSERTER SICHERHEIT
BLOC-BATTERIE À SÉCURITÉ AMÉLIORÉE

(30) Priority: 29.10.2021 KR 20210147382
(43) Date of publication of application: 27.12.2023
(73) Proprietor: LG Energy Solution, Ltd., Seoul 07335 (KR)
(72) Inventor: PARK, Gi-Dong, Daejeon 34122 (KR); KIM, Ki-Youn, Daejeon 34122 (KR); KIM, Hyeon-Kyu, Daejeon 34122 (KR); MUN, Jeong-O, Daejeon 34122 (KR); AHN, Jong-Kyu, Daejeon 34122 (KR); YUN, Young-Won, Daejeon 34122 (KR); LEE, Seong-Ju, Daejeon 34122 (KR); LEE, Jae-Ki, Daejeon 34122 (KR)
(74) Representative: Plasseraud IP
(86) International application number: PCT/KR2022/016749
(87) International publication number: WO 2023/075524

(56) References cited:
- EP-A1- 2 159 894
- CN-U- 207 368 148
- CN-U- 207 474 524
- JP-A- 2003 045 501
- JP-A- 2010 097 836
- KR-A- 20180 106 447
- KR-A- 20210 027 786
- KR-B1- 102 220 693
- US-A1- 2021 013 558

## Description

### TECHNICAL FIELD

The present application claims priority to Korean Patent Application No. 10-2021-0147382 filed on October 29, 2021 in the Republic of Korea.

The present disclosure relates to a battery, and more particularly, to a battery pack in which safety may be ensured even when a thermal event occurs.

### BACKGROUND ART

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated with an electrolyte, that is, a battery case.

In general, according to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

Secondary batteries have been widely used not only in small devices such as portable electronic devices but also in medium and large-sized devices such as electric vehicles and energy storage systems (ESSs), and their use has rapidly increased. Moreover, recently, residential ESSs have been widely used to store and supply power for use in structures such as houses and buildings. A core component of such a residential ESS may be a battery pack.

A plurality of battery cells (secondary batteries) are included in various battery packs including battery packs used in residential ESSs to increase a capacity and/or output. **In** particular, a plurality of battery cells are often densely arranged in a very narrow space to increase energy density of a battery pack.

Safety is one of most important issues in such a battery pack configuration. In particular, when a thermal event occurs in any one of a plurality of battery cells included in a battery pack, it is necessary to suppress propagation of the thermal event to other battery cells. Furthermore, venting gas may be ejected from a battery cell in which thermal runaway or the like occurs, and the venting gas may cause thermal runaway or the like of other battery cells, thereby resulting in thermal propagation.

Also, a plurality of battery cells included in a battery pack may be grouped into two or more battery modules. In this case, when thermal runaway occurs in a specific battery module, it is necessary to suppress propagation of the thermal runaway to other battery modules.

When thermal propagation between battery cells or battery modules is not appropriately suppressed, a thermal event of all of various battery cells or modules included in a battery pack may be caused, thereby resulting in a bigger problem such as a fire or explosion of the battery pack. Furthermore, the fire or explosion of the battery pack may cause great damage to surrounding people or property. In particular, when a fire or explosion occurs in a battery pack for a house, the safety of people living in the house may be damaged and a house fire may be caused, thereby resulting in great damage.

JP 2003 045501 A discloses a nickel-hydrogen storage battery system provided with a fire extinguishant suitably used for the nickel-hydrogen storage battery.

### DISCLOSURE

### Technical Problem

The present disclosure is designed to solve the problems of the related art, and therefore the present disclosure is directed to providing a battery pack in which a structure is improved to appropriately control a thermal event.

However, the technical purpose to be solved by the present disclosure is not limited to the above, and other objects not mentioned herein will be clearly understood by one of ordinary skill in the art from the following disclosure.

### Technical Solution

In one aspect of the present disclosure, there is provided a battery pack including a battery module including one or more battery cells, a control module connected to the battery module to manage the battery module, and a fire extinguishing tank containing a fire extinguishing agent and coupled to at least one of the battery module and the control module.

The fire extinguishing tank is mounted between the battery module and the control module.

Also, the fire extinguishing tank includes a connection member configured to electrically connect the battery module to the control module.

Also, the control module may be detachably provided on at least one side of the battery module.

Also, tank fastening portions may be respectively provided at an upper end and a lower end of the fire extinguishing tank to be coupled to the control module and the battery module.

Also, the fire extinguishing tank may be located over the battery module such that the fire extinguishing agent freely falls toward the battery module.

Also, the fire extinguishing agent may include at least one of an antifreezing solution, salt water, and insulating oil.

Also, the fire extinguishing tank may include a rupture member that is ruptured under a certain condition to allow the fire extinguishing agent to leak out when ruptured.

Also, the rupture member may be implemented as a glass bulb.

Also, an opening communicating with an inner space may be formed in the battery module, wherein at least a portion of the rupture member is inserted into the opening of the battery module.

Also, a venting path through which venting gas discharged from the opening is movable may be formed in the fire extinguishing tank.

Also, two or more battery modules may be included in the battery pack, wherein the fire extinguishing tank is configured to separately inject the fire extinguishing agent into each of the two or more battery modules.

**In** another aspect of the present disclosure, there is also provided an energy storage system including the battery pack according to the present disclosure.

### Advantageous Effects

According to an aspect of the present disclosure, a battery pack with improved safety may be provided.

**In** particular, according to an embodiment of the present disclosure, even when a thermal event occurs in a battery pack, the thermal event may be rapidly controlled.

Furthermore, when venting gas or the like due to thermal runaway or the like in a battery cell from among a plurality of battery cells included in the battery pack occurs, a temperature of the battery cell may be rapidly lowered by injecting a fire extinguishing agent.

Accordingly, according to this aspect of the present disclosure, propagation of thermal runaway or a fire to other battery cells or other battery modules due to heat or venting gas may be effectively prevented.

Also, according to an aspect of the present disclosure, even when a fire occurs in a battery pack, a fire extinguishing agent, for example, a liquid fire extinguishing agent, may be injected to immediately extinguish the fire.

Accordingly, according to this aspect, human and material damage due to the spread of the fire may be prevented or reduced.

Also, according to an aspect of the present disclosure, even when used under various external environments such as a temperature or humidity, fire suppression performance by a fire extinguishing agent may be safely ensured. For example, according to an embodiment of the present disclosure, because the fire extinguishing agent does not easily freeze even when exposed to a temperature below zero for a long time, a battery pack may be installed and used outdoors.

Accordingly, this aspect of the present disclosure may be more advantageously applied to battery packs used outdoors, in particular, residential battery packs.

Also, according to an embodiment of the present disclosure, when a thermal event occurs in a specific battery module in a battery pack including a plurality of battery modules, a fire extinguishing agent may be injected only to the specific battery module.

Accordingly, according to this aspect of the present disclosure, the specific battery module in which the thermal event occurs from among the plurality of battery modules may be intensively and effectively controlled. Also, according to this aspect of the present disclosure, because battery modules in which a thermal event does not occur may be continuously used, continuous power supply over a certain level may be possible.

In addition, various other additional effects may be achieved by various embodiments of the present disclosure. The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a combined perspective view schematically illustrating elements of a battery pack, according to an embodiment of the present disclosure.
FIG. 2 is an exploded perspective view illustrating elements of FIG. 1.
FIG. 3 is a perspective view schematically illustrating that a fire extinguishing tank is removed in a battery pack, according to an embodiment of the present disclosure.
FIG. 4 is a view schematically illustrating that the fire extinguishing tank is assembled on the battery pack of FIG. 3.
FIG. 5 is a bottom perspective view schematically illustrating elements of a control module, according to an embodiment of the present disclosure.
FIGS. 6 and 7 are perspective views schematically illustrating a fire extinguishing tank, viewed from above and below, according to an embodiment of the present disclosure.
FIG. 8 is a cross-sectional view schematically illustrating some elements of a battery pack, according to an embodiment of the present disclosure.
FIG. 9 is an enlarged cross-sectional view illustrating some elements of a battery pack, viewed from the front, according to an embodiment of the present disclosure.
FIG. 10 is a cross-sectional view illustrating some elements of a battery pack, viewed from above, according to an embodiment of the present disclosure.
FIG. 11 is a cross-sectional view schematically illustrating some elements of a battery pack, viewed from the side, according to an embodiment of the present disclosure.

### BEST MODE

It will be understood by one of ordinary skill in the art that when terms indicating directions such as upper, lower, left, right, front, and rear are used, these terms are only for convenience of explanation and may vary according to a position of a target object, a position of an observer, etc.

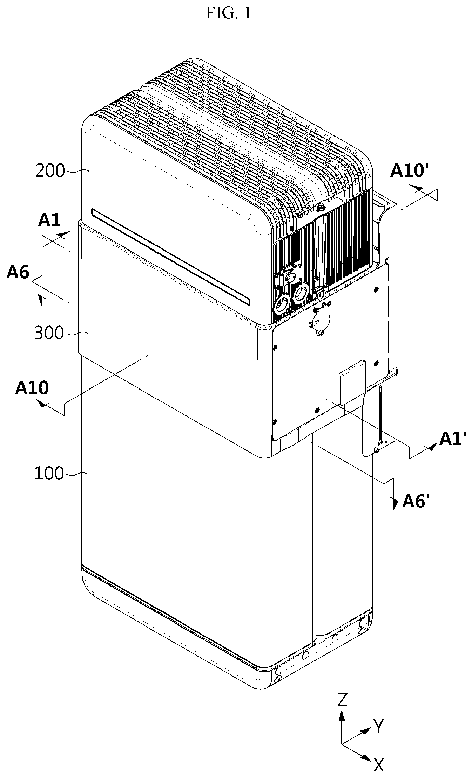

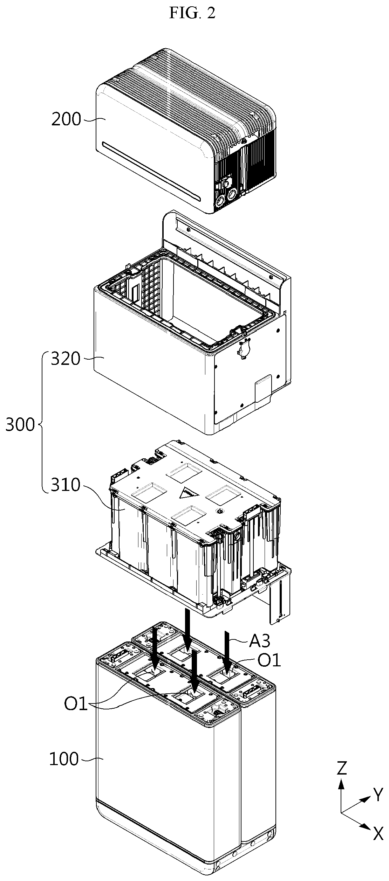

FIG. 1 is a combined perspective view schematically illustrating elements of a battery pack, according to an embodiment of the present disclosure. FIG. 2 is an exploded perspective view illustrating elements of FIG. 1.

Referring to FIGS. 1 and 2, a battery pack according to the present disclosure includes a battery module 100, a control module 200, and a fire extinguishing tank 300.

The battery module 100 may include one or more battery cells. Each battery cell may refer to a secondary battery. The secondary battery may include an electrode assembly, an electrolyte, and a battery case. Moreover, the battery cell included in the battery module 100 may be a pouch-type secondary battery. However, another type of secondary battery, for example, a cylindrical battery or a prismatic battery, may be included in the battery module 100 of the present disclosure.

Also, the battery module 100 may include a module case for accommodating the plurality of battery cells. In particular, the module case may have an empty inner space in which the plurality of battery cells may be accommodated. For example, the module case may be formed in a substantially rectangular parallelepiped shape as shown in FIG. 1, and may be erected in a vertical direction (Z axis direction) perpendicular to the ground.

The control module 200 may control an overall operation of the battery pack. In particular, the control module 200 may be electrically connected to the battery module 100. The control module 200 may be configured to manage the battery module 100. In particular, the control module 200 may be configured to control a charging operation or a discharging operation of the battery module 100. Also, the control module 200 may be configured to measure, calculate, receive, or control various electrical, physical, and chemical characteristics of the battery module 100, the battery cell included in the battery module100, or a surrounding environment thereof. For example, the control module 200 may measure, calculate, or control a voltage, current, temperature, state of charge (SOC), state of health (SOH), and internal resistance of the battery cell or the battery module 100.

The control module 200 may receive operating power from the battery module 100 to manage the battery module 100. Also, the control module 200 may transmit and receive various data to and from the battery module 100 or an external device through a wired or wireless communication network.

The control module 200 may include various electronic components such as a battery management system (BMS), a relay, and a current sensor. Also, the control module 200 may include a control housing in which the electronic components are accommodated.

Also, the control module 200 may include a pack terminal. The pack terminal may be configured to connect the battery pack to an external charging/discharging device. For example, the pack terminal may include an outlet, or a plug, or a connector to be connected to a commercial power source or a load. In this case, the control module 200 may include a power path through which charging power and discharging power is transmitted and received to and from the battery module 100. The power path may function as a path through which charging/discharging power is transmitted and received between the pack terminal and the battery module 100.

The fire extinguishing tank 300 may contain a fire extinguishing agent. The fire extinguishing agent may be any of various materials for suppressing or extinguishing a fire or lowering a temperature. Also, the fire extinguishing tank 300 may include a tank housing having an inner space in which the fire extinguishing agent is accommodated.

The fire extinguishing tank 300 may be coupled to at least one of the battery module 100 and the control module 200. For example, the fire extinguishing tank 300 may be coupled to the battery module 100. Also, the fire extinguishing tank 300 may be coupled to the control module 200.

In particular, the fire extinguishing tank 300 may be detachably provided. For example, the tank housing of the fire extinguishing tank 300 may be mounted on and detached from the module case of the battery module 100. Also, the tank housing of the fire extinguishing tank 300 may be mounted on and detached from the control housing of the control module 200.

According to this embodiment of the present disclosure, because the fire extinguishing tank 300 is mounted on the battery pack including the battery module 100 and the control module 200, safety may be greatly improved. In particular, when an abnormal situation occurs in the battery pack, for example, when thermal runaway occurs in the battery module 100 or a fire occurs in the battery module 100 or the control module 200, the occurrence of a fire may be suppressed or a generated fire may be extinguished through the fire extinguishing agent. Also, thermal runaway or overheating may be prevented by lowering a temperature of the battery module 100 or the control module 200. Hence, an increase in the risk of a fire or the like to other parts outside the battery pack due to an abnormal situation such as a fire or overheating of the battery pack may be prevented.

The fire extinguishing tank 300 may be mounted between the battery module 100 and the control module 200. In particular, the battery module 100 may be located under the control module 200. In this case, the fire extinguishing tank 300 may be located over the battery module 100 and under the control module 200.

According to this embodiment of the present disclosure, in the battery pack including the battery module 100 and the control module 200, the fire extinguishing tank 300 may be located adjacent to both the battery module 100 and the control module 200. Hence, when a thermal event occurs in the battery module 100 and the control module 200, the thermal event may be rapidly and effectively dealt with.

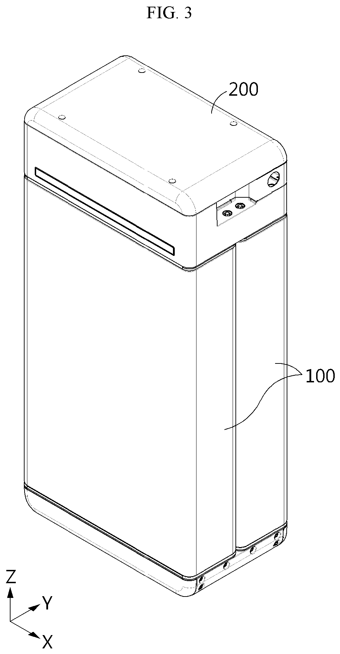

The control module 200 may be detachably located on at least one side of the battery module 100, which will be described in more detail with reference to FIGS. 3 to 5.

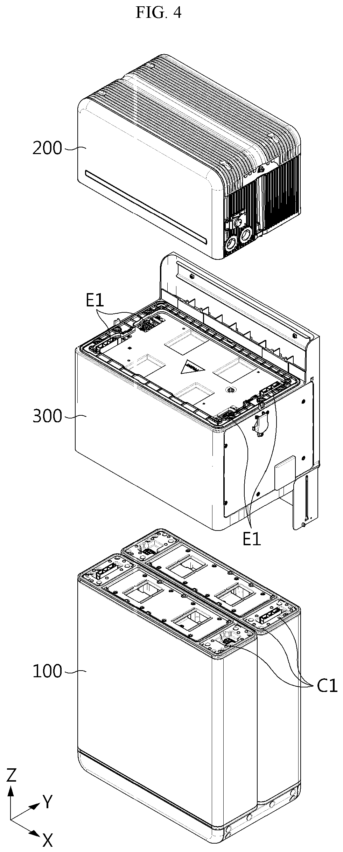

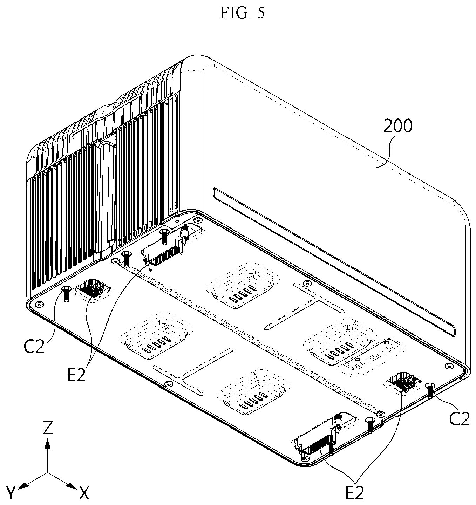

FIG. 3 is a perspective view schematically illustrating that the fire extinguishing tank 300 is removed in a battery pack, according to an embodiment of the present disclosure. Also, FIG. 4 is a view schematically illustrating that the fire extinguishing tank 300 is assembled on the battery pack of FIG. 3. Also, FIG. 5 is a bottom perspective view schematically illustrating elements of the control module 200, according to an embodiment of the present disclosure.

First, referring to FIG. 3, unlike in FIG. 1, the fire extinguishing tank 300 may not be located between the control module 200 and the battery module 100. Moreover, the control module 200 may be directly mounted on the top of the battery module 100, in a state where the fire extinguishing tank 300 is not located under the control module 200. Also, the control module 200 may be mounted on the top of the battery module 100 and then may be detachable again.

To this end, the battery module 100 and the control module 200 may include elements for electrical and mechanical connection therebetween.

For example, a module connector E1 for electrical connection may be provided on the top of the battery module 100, as shown in FIG. 4. A control connector E2 may be provided on the bottom of the control module 200, as shown in FIG. 5. In this case, the control connector E2 may be directly connected to the module connector E1. In particular, the module connector E1 and the control connector E2 may be electrically connected to each other, so that charging/discharging power or an electrical signal (data) is transmitted. In particular, each of the battery module 100 and the control module 200 may separately include a power supply connector for transmitting and receiving charging/discharging power and a communication connector for transmitting and receiving an electrical signal.

Also, a module fastening portion C1 may be formed on the top of the battery module 100, as shown in FIG. 4. A control fastening portion C2 may be formed on the bottom of the control module 200, as shown in FIG. 5. The control fastening portion C2 and the module fastening portion C1 may be coupled and fixed to each other. For example, the module fastening portion C1 and the control fastening portion C2 may be fastened to each other through bolting. The control fastening portion C2 may be directly mounted on or separated from the module fastening portion C1, through fastening or unfastening between the module fastening portion C1 and the control fastening portion C2.

As such, the battery module 100 and the control module 200 may be mechanically and electrically directly coupled to each other. In particular, the control module 200 may be coupled to the battery module 100 in a plug-in manner so that the control module 200 is seated on the battery module 100 and electrically connected to the battery module 100. However, in the battery pack according to an aspect of the present disclosure, the fire extinguishing tank 300 may be located in a space between the battery module 100 and the control module 200, as marked by a dashed line in FIG. 4.

In particular, even when the battery pack is manufactured to be usable as shown in FIG. 3, the battery pack according to an embodiment of the present disclosure may be implemented so that the fire extinguishing tank 300 is inserted and mounted between the battery module 100 and the control module 200.

According to this embodiment of the present disclosure, safety by the fire extinguishing tank 300 may be ensured while utilizing an existing battery pack structure or production line as much as possible. In particular, according to an embodiment of the present disclosure, unlike the battery pack in which the battery module 100 and the control module 200 are directly mounted, because the fire extinguishing tank 300 may be located between the battery module 100 and the control module 200, safety against a thermal event may be ensured.

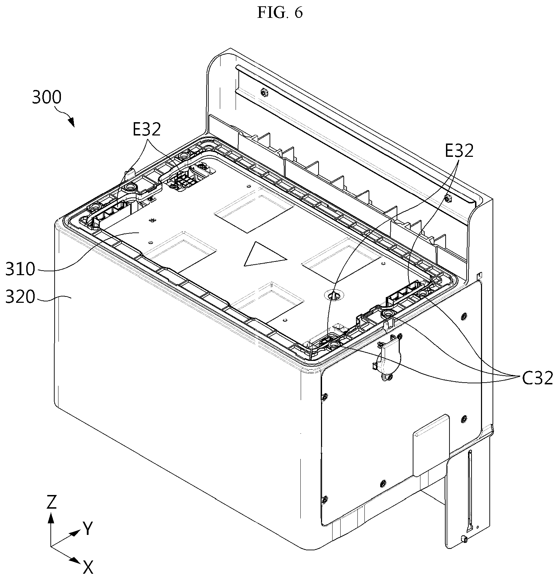

The fire extinguishing tank 300 may be mechanically coupled to the battery module 100 and/or the control module 200. To this end, the fire extinguishing tank 300 may include a tank fastening portion, which will be described in more detail with reference to FIGS. 6 to 8.

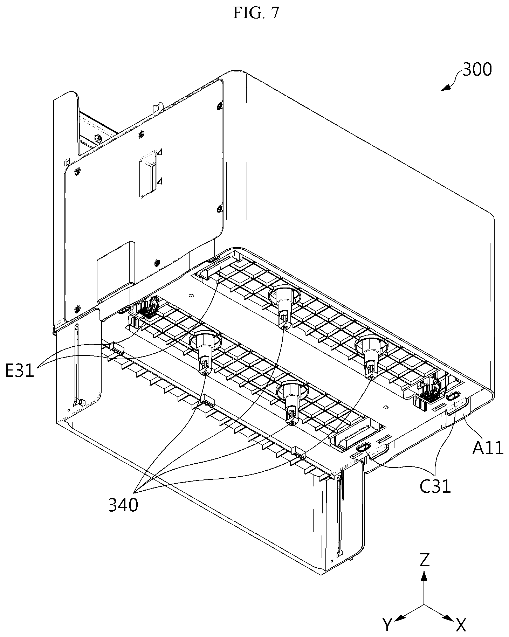

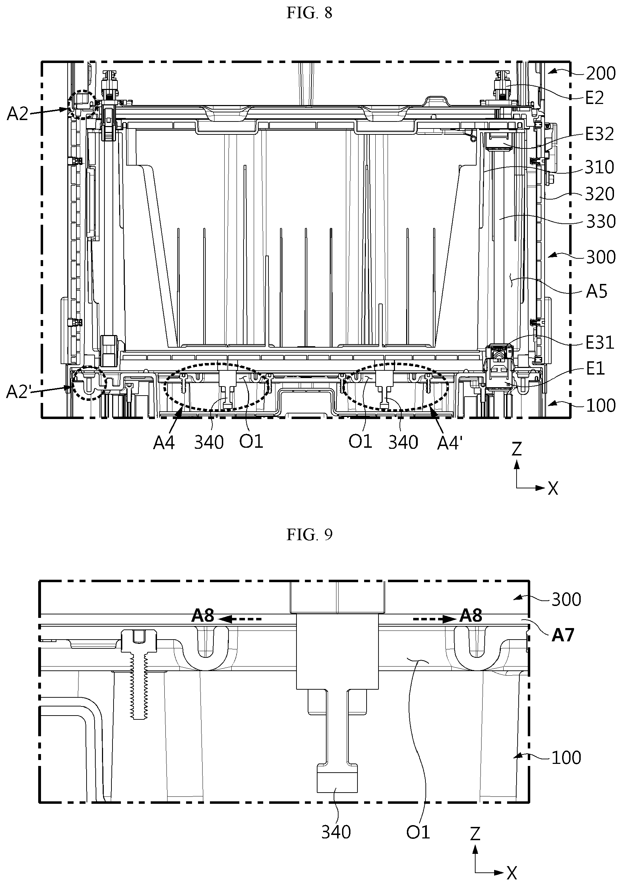

FIGS. 6 and 7 are perspective views schematically illustrating the fire extinguishing tank 300, viewed from above and below, according to an embodiment of the present disclosure. Also, FIG. 8 is a cross-sectional view schematically illustrating some elements of a battery pack, according to an embodiment of the present disclosure. For example, FIG. 8 may be a cross-sectional view taken along line A1-A1' of FIG. 1.

First, referring to FIG. 6, a tank fastening portion C32 may be provided at an upper end of the fire extinguishing tank 300 to be coupled to the control module 200. The tank fastening portion C32 that is a fastening portion provided on the tank housing of the fire extinguishing tank 300 may be coupled to the control module 200. For example, as shown in FIG. 5, when the control fastening portion C2 is provided at a lower end of the control module 200, the tank fastening portion C32 formed at the upper end of the fire extinguishing tank 300 may be coupled to the control fastening portion C2. In more detail, the tank fastening portion C32 may be bolted to the control fastening portion C2. For example, the tank fastening portion C32 and the control fastening portion C2 may be bolted to each other, as shown in a portion A2 in FIG. 8. The control module 200 and the fire extinguishing tank 300 may be fixed to each other, due to bolting between the control fastening portion C2 and the tank fastening portion C32.

In particular, as described in the above embodiment, the control module 200 may be directly seated on the battery module 100. In this case, the control fastening portion C2 may be originally coupled to the module fastening portion C1 of the battery module 100. However, in the battery pack according to the present disclosure, the tank fastening portion C32 provided on the fire extinguishing tank 300 may be coupled to the control fastening portion C2. To this end, the tank fastening portion C32 and the module fastening portion C1 may have the same shape and the same position in a horizontal direction. That is, the tank fastening portion C32 may have compatibility replacing the module fastening portion C1 with respect to the control fastening portion C2.

Also, a tank fastening portion may be provided at a lower end of the fire extinguishing tank 300 to be coupled to the battery module 100. For example, referring to FIG. 7, a tank fastening portion C31 may be provided at an edge portion of a lower end of the fire extinguishing tank 300 to be coupled to the battery module 100. For example, when the module fastening portion C1 is formed at an upper end of the battery module 100 as shown in FIG. 4, the tank fastening portion C31 of the fire extinguishing tank 300 may be coupled to the module fastening portion C1.

In more detail, the tank fastening portion C31 may be bolted to the module fastening portion C1. For example, the tank fastening portion C31 and the module fastening portion C1 may be bolted to each other, as shown in a portion A2' of FIG. 8. The battery module 100 and the fire extinguishing tank 300 may be fixed to each other, due to bolting between the module fastening portion C1 and the tank fastening portion C31.

Furthermore, as described in the above embodiment, the battery module 100 may be directly coupled to the control module 200. In this case, the module fastening portion C1 may be originally coupled to the control fastening portion C2 of the control module 200. However, in the battery pack according to the present disclosure, the tank fastening portion C31 provided on the fire extinguishing tank 300 and the control fastening portion C2 have the same shape and the same position in the horizontal direction so that the tank fastening portion C31 is coupled to the module fastening portion C1. That is, the tank fastening portion C31 may have compatibility replacing the control fastening portion C2 with respect to the module fastening portion C1.

According to this embodiment of the present disclosure, unlike the battery pack in which the battery module 100 and the control module 200 are directly coupled to each other, the fire extinguishing tank 300 may be easily assembled in a space between the battery module 100 and the control module 200. In particular, in this case, the fire extinguishing tank 300 may be compatibly used, without changing a configuration of the battery module 100 or the control module 200.

Also, in the battery pack according to an aspect of the present disclosure, the battery module 100, the fire extinguishing tank 300, and the control module 200 may be sequentially stacked upward. According to this embodiment, a stacked state may be stably maintained.

**In** addition, for stable coupling and easy assembly, the fire extinguishing tank 300 may include any of various types of fastening portions to be mechanically coupled to the battery module 100 and/or the control module 200. For example, the fire extinguishing tank 300 may be mechanically coupled to the battery module 100 and/or the control module 200 by using any of various methods such as hook, insertion, or riveting.

The fire extinguishing tank 300 may include a connection member 330, as shown in FIG. 8. The connection member 330 is an element configured to electrically connect the battery module 100 to the control module 200. In particular, the connection member 330 may be located between the module connector E1 provided on the battery module 100 and the control connector E2 provided on the control module 200 to connect the battery module 100 to the control module 200. Furthermore, both ends of the connection member 330 may be coupled to the module connector E1 and the control connector E2 to transmit charging/discharging power and/or an electrical signal.

In a specific example, the connection member 330 may be formed as a cable that extends long in one direction and allows power or an electrical signal to move therethrough. The connection member 330 may include tank connectors at both ends of the cable. For example, a tank connector E31 may be provided at a lower end of the connection member 330, as shown in FIGS. 7 and 8. The tank connector E31 may be connected to the module connector E1 of the battery module 100. Also, a tank connector E32 may be provided at an upper end of the connection member 330, as shown in FIGS. 6 and 8. The tank connector E32 may be connected to the control connector E2 of the control module 200.

The fire extinguishing tank 300 may include an inner tank 310 and an outer tank 320, as shown in FIGS. 2, 6, and 8. The inner tank 310 may have an empty inner space in which a fire extinguishing agent may be directly accommodated. In particular, the inner tank may be sealed to accommodate the fire extinguishing agent therein. For example, the inner tank 310 may be formed to have airtight performance of IP 55, so that a fire extinguishing solution or the like does not leak out in a normal state. The outer tank 320 may be larger than the inner tank 310 and may have an inner space in which the inner tank 310 is accommodated. Accordingly, the fire extinguishing tank 300 may have at least partially a double structure.

Furthermore, the inner tank 310 and the outer tank 320 may be at least partially spaced apart from each other. In particular, referring to an embodiment of FIG. 8, the inner tank 310 and the outer tank 320 may be at least partially spaced apart from each other in a left-right direction. For example, an empty space A5 may be formed between a side wall of the inner tank 310 and a side wall of the outer tank 320.

In this case, the fire extinguishing agent in the fire extinguishing tank 300 may be more safely contained. In particular, even when impact or the like is applied to a side surface of the fire extinguishing tank 300, transmission of the impact may be reduced due to the double structure of the outer tank 320 and the inner tank 310 and the empty space between the outer tank 320 and the inner tank 310. Accordingly, because the fire extinguishing tank 300, in particular, the inner tank 310, is not damaged by impact or vibration, abnormal leakage of the fire extinguishing agent may be prevented.

In this embodiment of the fire extinguishing tank 300, the connection member 330 may be located in a space between the inner tank 310 and the outer tank 320. For example, in the embodiment of FIG. 8, there may be an empty space between a right wall of the inner tank 310 and a right wall of the outer tank 320. The connection member 330 may be located in the separation space. Also, there may be a similar empty space between a left wall of the inner tank 310 and a left wall of the outer tank 320, and the connection member 330 may be located in the empty space.

According to this embodiment, the connection member 330 may not directly contact the fire extinguishing agent in the fire extinguishing tank 300. Accordingly, corrosion of the connection member 330 or leakage of current due to the fire extinguishing agent may be prevented.

The fire extinguishing tank 300 may be located over the battery module 100, as shown in FIGS. 1 and 2. The fire extinguishing agent discharged from the fire extinguishing tank 300 may freely fall toward the battery module 100.

That is, the fire extinguishing tank 300 does not require a separate power source to move the fire extinguishing agent toward the battery module 100, and the fire extinguishing agent may be rapidly injected. For example, referring to an embodiment of FIG. 2, the fire extinguishing agent may be injected toward the battery module 100, as marked by an arrow A3. This injection process may be naturally performed in a free fall manner. Accordingly, according to this embodiment of the present disclosure, efficient thermal control of a battery cell whose temperature rises due to thermal runaway or the like may be made.

The fire extinguishing agent may include a liquid material. A liquid material may be accommodated as the fire extinguishing agent in an inner space of the inner tank 310 of the fire extinguishing tank 300. For example, the fire extinguishing agent may be water, a mixture of water and one or more additives, or a liquid including the mixture.

The liquid fire extinguishing agent may be easily injected into the battery module 100 located under the fir extinguishing tank 300 in a free fall manner. Also, the liquid fire extinguishing agent may lower a temperature of the battery module 100, which may help to extinguish a fire. Also, in this configuration, the fire extinguishing solution may be rapidly and smoothly introduced into the battery module 100, in particular, to the bottom of the module. **In** addition, due to the liquid fire extinguishing agent, oxygen may be prevented from being introduced into the battery module, in particular, into a battery cell in which an event occurs.

Furthermore, the fire extinguishing agent may include at least one of an antifreezing solution, salt water, and insulating oil. That is, the fire extinguishing tank 300 may contain an antifreezing solution, salt water, and/or insulating oil as the fire extinguishing agent, or may additionally contain another material together with the liquid material.

According to this embodiment, the battery pack may be more easily installed outdoors. In particular, a battery pack used in a residential ESS or an industrial ESS may be used outdoors. In this case, when an antifreezing solution, salt water, or insulating oil is used as the fire extinguishing agent as in the above embodiment, the fire extinguishing agent may be maintained in a liquid state without freezing even at a low temperature. Accordingly, a problem that the fire extinguishing agent should be injected into the battery module 100 but may not be injected due to freezing may be solved. Also, in this case, because a volume is prevented from changing according to an external temperature, the fire extinguishing tank 300 or the like may be prevented from being frozen to burst. Moreover, even when insulating oil is injected into the battery module 100, insulating resistance performance may be provided. Hence, this embodiment of the present disclosure may be more advantageously applied to a residual battery pack or a residential ESS.

The fire extinguishing tank 300 may include a rupture member 340. The rupture member 340 may be ruptured under a certain condition. The rupture member 340 may be configured to allow the fire extinguishing agent to leak out when ruptured.

To this end, the rupture member 340 may communicate with an inner space of the fire extinguishing tank 300. In particular, when the fire extinguishing tank 300 includes the inner tank 310 and the outer tank 320, the rupture member 340 may communicate with an inner space of the inner tank 310. For example, the inner tank 310 may be substantially sealed, and an injection hole may be formed in the inner tank 310. The rupture member 340 may be inserted into the injection hole to close the injection hole. When the rupture member 340 is ruptured, the injection hole may be open, and thus, the fire extinguishing agent contained in the inner tank 310 may leak outward.

The rupture member 340 may be located on the bottom of the fire extinguishing tank 300. In this case, when the rupture member 340 is ruptured, the fire extinguishing agent may be more smoothly injected into the battery module 100. In particular, the fire extinguishing agent may be injected into the battery module 100 in a free fall manner.

At least one rupture member 340 may be provided on one fire extinguishing tank 300. For example, as shown in FIG. 7, four rupture members 340 may be provided on one fire extinguishing tank 300.

Also, the rupture member 340 may be broken by a condition such as a temperature or pressure. For example, the rupture member 340 may be ruptured at a certain temperature or higher and/or a certain pressure or higher.

In particular, the rupture member 340 may be ruptured by venting gas. That is, when thermal runaway or the like occurs in the battery module 100, venting gas may be generated and discharged from the battery module 100. In this case, the rupture member 340 may be formed of a material or shape that may be ruptured by heat or pressure of the venting gas.

The rupture member 340 may be implemented as a glass bulb. For example, an injection hole may be formed in the fire extinguishing tank 300 and the glass bulb may be inserted into and fastened to the injection hole. When the glass bulb contacts venting gas and is broken, the fire extinguishing agent in the fire extinguishing tank 300 may be ejected to the outside, in particular, toward the battery module 100.

According to this embodiment, the fire extinguishing tank 300 may be simply configured, and the fire extinguishing agent may be more smoothly injected into the battery module 100. Also, according to this embodiment, the rupture member 340 may be more easily ruptured by venting gas generated from the battery module 100.

In addition, the rupture member 340 may be formed of any of various materials or shapes that may be ruptured according to a change in a condition such as heat or pressure. For example, the rupture member 340 may be formed of a vinyl material or an injection molding product.

An opening communicating with an inner space may be formed in the battery module 100. For example, as shown in FIG. 2, an opening O1 may be formed at an upper end of the battery module 100. The opening O1 may communicate with an inner space of a module case in which a battery cell is located.

At least a portion of the rupture member 340 may be inserted into the opening O1 of the battery module 100. For example, as shown in portions A4 and A4' in FIG. 4, the rupture member 340 may be inserted into an inner space of the battery module 100 through the opening O1.

According to this embodiment of the present disclosure, the fire extinguishing agent may be introduced into the inner space of the battery module 100. Accordingly, a thermal event such as thermal runaway, gas ejection or, fire occurring in the battery module 100 may be more effectively dealt with. Moreover, a battery cell that is a direct target of a thermal event may be located in the inner space of the battery module 100. Accordingly, according to the embodiment, the fire extinguishing agent may be directly sprayed to the battery cell. Hence, a fire or the like may be more effectively suppressed or prevented.

Also, according to this embodiment of the present disclosure, the rupture member 340 such as a glass bulb may more rapidly respond to venting gas. That is, when venting gas is generated in the inner space of the battery module 100, the venting gas may be discharged to the outside of the battery module 100 through the opening O1. In other words, the opening O1 may function as an outlet of the venting gas. Furthermore, when the opening O1 is located on the top of the battery module 100, a large amount of venting gas may be discharged toward the opening O1 located at the top.

In this case, when a glass bulb is located at a portion where the venting gas is discharged, the venting gas may be rapidly ruptured when the venting gas is generated. Hence, when a thermal event occurs, the fire extinguishing agent may be more rapidly injected. Also, in this case, because the fire extinguishing agent is directly sprayed to the discharged venting gas, a temperature of the venting gas may be lowered and a source that may cause a fire such as a flame or spark included in the venting gas may be prevented from being discharged to the outside.

The opening O1 formed in the battery module 100 may not necessarily be provided to discharge venting gas. For example, the opening O1 provided at the upper end of the battery module 100 of FIG. 2 or the like may be provided to transport the battery module 100. That is, the opening O1 may provide a space into which a worker or a transporting device may insert his/her fingers or a holding tool to hold the battery module 100 when transporting the battery module100. Alternatively, the opening O1 may be provided so that the control module 200 or the fire extinguishing tank 300 is inserted into the opening O1.

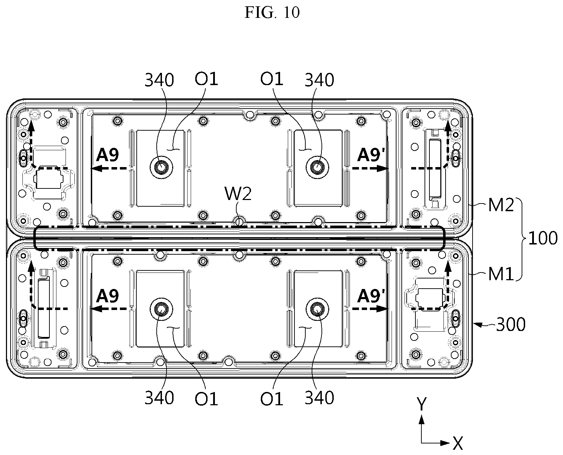

A venting path through which venting gas is movable may be formed in the fire extinguishing tank 300. That is, when venting gas is discharged from the opening O1 of the battery module 100, a venting path may be formed inside and/or outside the fire extinguishing tank 300 so that the venting gas is discharged to a specific portion. The venting path may be formed by the fire extinguishing tank 300 alone or together with other elements, which will be described with reference to FIGS. 9 and 10 together with FIG. 8.

FIG. 9 is an enlarged cross-sectional view illustrating some elements of a battery pack, viewed from the front, according to an embodiment of the present disclosure. For example, FIG. 9 may be an enlarged view illustrating the portion A4 of FIG. 8. Also, FIG. 10 is a cross-sectional view illustrating some elements of a battery pack, viewed from above, according to an embodiment of the present disclosure. For example, FIG. 10 is a cross-sectional view taken along line A6-A6' of FIG. 1.

First, referring to FIG. 9, in a state where the fire extinguishing tank 300 is mounted on the top of the battery module 100, the fire extinguishing tank 300 and the battery module 100 may be partially spaced apart from each other. The separation space may communicate with the opening O1 of the batter module 100 to function as a venting path. For example, an empty space A7 may be formed between an upper end of the battery module 100 and a lower end of the fire extinguishing tank 300, as shown in FIG. 9. Venting gas discharged through the opening O1 may be discharged to the outside through the separation space A7 between the battery module 100 and the fire extinguishing tank 300, as marked by an arrow A8. That is, in this embodiment, the separation space A7 between the battery module 100 and the fire extinguishing tank 300 may be provided as a venting path. Also, the venting path formed between the battery module 100 and the fire extinguishing tank 300 may be connected to the outside of the battery pack, to allow venting gas in the battery pack to be discharged to the outside.

Also, a venting path may be formed in the fire extinguishing tank 300. In particular, when the fire extinguishing tank 300 includes the inner tank 310 and the outer tank 320, an empty space may be formed between the inner tank 310 and the outer tank 320. For example, the inner tank 310 and the outer tank 320 may be spaced apart from each other to form the space A5 that may function as a venting path, as shown in FIG. 8.

The separation space A5 between the inner tank 310 and the outer tank 320 may communicate with the opening O1 of the battery module 100. Also, the venting path formed between the inner tank 310 and the outer tank 320 may be connected to the outside of the battery pack, to allow venting gas in the battery pack to be discharged to the outside.

Also, the venting paths may be formed in the space between the fire extinguishing tank 300 and the battery module 100 as marked by the arrow A8 in FIG. 9 and in the space A5 between the outer tank 320 and the inner tank 310 as shown in FIG. 8. The venting paths may communicate with each other, and may be connected to the opening O1 and an outer space.

In this embodiment, venting gas discharged from the battery module 100 toward the opening O1 may break the rupture member 340, for example, a glass bulb, located in the opening O1 so that the fire extinguishing agent is introduced into the battery module 100. The venting gas may be discharged to the outside of the battery module 100 through the venting paths formed between the fire extinguishing tank 300 and the battery module 100 and between the outer tank 320 and the inner tank 310, as marked by arrows A9 and A9' in FIG. 10. In more detail, referring to an embodiment of FIG. 10, venting gas may move in the left-right direction (X axis direction) in an inner space of the fire extinguishing tank 300 and then may move backward (+Y axis direction) to be discharged to the outside of the battery pack. In this case, an outlet of the venting path of the battery pack may be located at the rear of the battery pack.

According to this embodiment, because venting gas is discharged by the fire extinguishing tank 300 mounted on the battery module 100, the venting gas in the battery module 100 may be smoothly discharged to the outside and, thus, an explosion or the like due to an increase in internal pressure of the battery module 100 may be prevented.

Also, according to this embodiment, a direction of venting gas discharged from the battery module 100 may be effectively controlled by the fire extinguishing tank 300. In particular, in the embodiment, venting gas may be guided to flow toward the rupture member 340. Accordingly, when venting gas is generated, the rupture member 340 may be rapidly ruptured. Furthermore, in the embodiment, venting gas may move to the rear of the battery pack, as shown in FIG. 10. Accordingly, direct exposure of the venting gas to a user or another element located on a front side of the battery pack may be prevented.

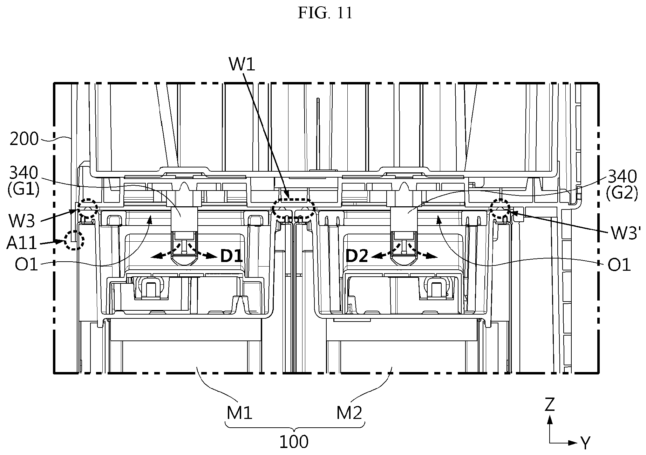

Two or more battery modules 100 may be included in the battery pack. In this case, the fire extinguishing tank 300 may be configured to separately inject the fire extinguishing agent into each of the two or more battery modules 100, which will be described in more detail with reference to FIG. 11.

FIG. 11 is a cross-sectional view schematically illustrating some elements of a battery pack, viewed from the side, according to an embodiment of the present disclosure. For example, FIG. 11 may be a cross-sectional view taken along line A10-A10' of FIG. 1.

Referring to FIG. 11 or the like, two or more battery modules 100 may be included in the battery pack. The fire extinguishing tank 300 may be assembled together on the two or more battery modules 100. In this case, the fire extinguishing tank 300 may include at least two rupture members 340, and the rupture members 340 may be spaced apart from each other in a stacking direction of the battery modules 100. A plurality of rupture members 340 may be respectively inserted into the openings O1 of different battery modules 100. For example, in an embodiment of FIG. 11, a first glass bulb G1 may be inserted into the opening O1 of a first module M1, and a second glass bulb G2 may be inserted into the opening O1 of a second module M2.

In this configuration, the glass bulbs G1 and G2 may allow a fire extinguishing agent to be injected into different battery modules 100 (M1 and M2). For example, when venting gas or flame is generated from the first module M1, the first glass bulb G1 may be broken, and thus, the fire extinguishing agent of the fire extinguishing tank 300 may be injected into the first module M1, as marked by an arrow D1. In another example, when venting gas or flame is generated from the second module M2, the second glass bulb G2 may be broken, and thus, the fire extinguishing agent of the fire extinguishing tank 300 may be injected into the second module M2, as marked by an arrow D2.

According to this embodiment of the present disclosure, in the battery pack including the plurality of battery modules 100, the fire extinguishing agent may be directly injected into each battery module 100. In particular, according to the embodiment, the fire extinguishing agent may be injected only into the battery module 100 in which an event occurs. Accordingly, other battery modules 100 into which the fire extinguishing agent is not injected may continuously operate. For example, when an event occurs in the first module M1, the first glass bulb G1 may be broken and the fire extinguishing agent may be injected only into the first module M1. In this case, because the second glass bulb G2 is not broken, the fire extinguishing agent is not injected into the second module M2, and thus, the second module M2 may be continuously used. Hence, a problem that the entire battery pack is not used when an event occurs in some battery modules 100 may be solved.

Although one rupture member 340 is inserted into the battery module 100 in FIG. 11, two or more rupture members 340 may be inserted into one battery module 100. For example, as shown in FIG. 7, the fire extinguishing tank 300 may include two or more rupture members 340 in a front-rear direction and the left-right direction. In this case, two rupture members 340 located in the left-right direction may be inserted together into one battery module 100.

When a plurality of battery modules 100 are included in the battery pack, venting paths may be separated between the battery modules 100. For example, a protrusion W1 may be formed between the first module M1 and the second module M2, as shown in FIG. 11. The protrusion may protrude from an upper end of the battery module 100 upward, to contact a lower end of the fire extinguishing tank 300.

In this case, the protrusion may prevent venting gas or the like from flowing toward other battery modules 100. For example, when venting gas is ejected through the opening O1 in the first module M1, the venting gas may flow in the left-right direction (X axis direction) as shown in FIG. 10 along a venting path formed between the top of the first module M1 and the bottom of the fire extinguishing tank 300. However, the venting gas discharged from the first module M1 may not move toward the second module M2, due to the protrusion W1 formed between the first module M1 and the second module M2. That is, the protrusion W1 formed between the first module M1 and the second module M2 may function as a partition wall that blocks movement of the venting gas between the first module M1 and the second module M2. In particular, the central protrusion W1 may be formed of an elastic material such as rubber, silicone, or urethane, to ensure sealing performance.

The protrusion W1 may extend long in a direction (X axis direction) perpendicular to the stacking direction of the battery modules 100, in the horizontal direction. For example, in FIG. 10, a protrusion W2 that functions as a partition wall may be located between the first module M1 and the second module M2 and may extend long in the left-right direction (X axis direction).

According to this embodiment of the present disclosure, a venting direction of venting gas may be more reliably controlled. Moreover, in this case, because venting gas discharged from some battery modules 100 is prevented from being introduced into other battery modules 100, propagation of thermal runaway or the like between modules may be prevented. Also, according to the embodiment, a problem that the rupture member 340 is broken due to venting gas discharged from the battery modules 100 and the fire extinguishing agent is injected into normal battery modules 100 may be solved.

Also, a partition wall may be formed on outer sides of the plurality of battery modules 100. For example, a protrusion (front protrusion) W3 that is a partition wall contacting the fire extinguishing tank 200 to seal a venting path may also be provided on an upper edge portion of a front side of the first module M1 located at the front, as shown in FIG. 11. Also, a protrusion (rear protrusion) W3' that is a partition wall contacting the fire extinguishing tank 200 to seal a venting path may also be provided on an upper edge portion of a rear side of the second module M2 located at the rear, as shown in FIG. 11. Also, each of the front and rear protrusions W3 and W3' may be formed of an elastic material such as rubber, silicone, or urethane to ensure sealing performance.

According to this embodiment of the present disclosure, because a sealing force of a venting path formed between the battery module 100 and the fire extinguishing tank 300 may be ensured, venting gas may be discharged only in an intended direction. For example, due to this partition wall, venting gas may move only in directions marked by the arrows A9 and A9' in FIG. 10, and may be prevented from moving in other directions, for example, toward the front of the battery pack.

The fire extinguishing tank 300 may further include a cover portion that protrudes toward the battery module 100 from an edge portion coupled to the battery module 100. For example, referring to FIGS. 7 and 11, a cover portion A11 extending more downward than an upper end of the battery module 100 may be formed at a lower end of at least a part of an edge portion of the fire extinguishing tank 300. When the fire extinguishing tank 300 is mounted on the battery module 100, the cover portion may surround an outer side of the battery module 100.

According to this embodiment of the present disclosure, coupling between the fire extinguishing tank 300 and the battery module 100 may be further improved. Also, according to this embodiment, when the fire extinguishing agent is sprayed from the fire extinguishing tank 300, the fire extinguishing agent may be more easily injected into the battery module 100 and the fire extinguishing agent may be prevented from leaking out to the outside of the battery pack.

Also, according to the embodiment, leakage of venting gas in an unintended direction may be prevented. For example, the cover portion may be formed on three edges, that is, front, left, and right edges, from among lower edges. **In** this case, venting gas introduced between the fire extinguishing tank 300 and the battery module 100 may be guided to leak out toward the rear of the battery pack, and may be prevented from leaking out forward, leftward, or rightward.

Furthermore, the fire extinguishing tank 300 may further include a sealing member on an edge portion coupled to the battery module 100 and/or the control module 200. For example, the fire extinguishing tank 300 may include an upper sealing member and a lower sealing member having ring shapes. The upper sealing member may be provided on an upper edge portion of the fire extinguishing tank 300, and the lower sealing member may be provided on a lower edge portion of the fire extinguishing tank 300. The sealing member may be formed of an elastic material such as rubber, silicone, or urethane.

According to this embodiment, sealing performance at an upper end and/or a lower end of the fire extinguishing tank 300 coupled to other elements (battery module and control module) may be ensured. Accordingly, leakage of venting gas or penetration of a foreign material such as water, moisture, or dust through the portion may be prevented.

The battery pack according to the present disclosure may be configured so that the fire extinguishing tank 300, the battery module 100, and the control module 200 are fixedly coupled to a wall of a structure such as a house or a building. For example, a fixing hole may be formed in a rear surface of the fire extinguishing tank 300, and the fire extinguishing tank 300 may be fixed to the wall through the fixing hole. Alternatively, the battery pack according to the present disclosure may further include a fixing unit that is coupled to the wall or the like. The fixing unit may be fastened to an element such as the fire extinguishing tank 300 or the battery module 100 to fix the battery pack to the wall.

An energy storage system (ESS) according to the present disclosure may include one or more battery packs according to the present disclosure. Also, the ESS according to the present disclosure may further include general elements included in an energy storage system, in addition to the battery pack. In particular, the ESS according to the present disclosure may be a residential ESS (for construction) used to store energy in a house or a building.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

### [Description of Reference Numerals]

100: battery module
M1: first module, M2: second module
200: control module
300: extinguishing tank
1310: inner tank
320: outer tank
330: connection member
340: rupture member
C1: module fastening portion, C2: control fastening portion,
C31, C32: tank fastening portion
E1: module connector, E2: control connector
E31, E32: tank connector

## Claims

1. A battery pack comprising:
a battery module (100) comprising one or more battery cells;
a control module (200) connected to the battery module (100) to manage the battery module (100); and
a fire extinguishing tank (300) containing a fire extinguishing agent and coupled to at least one of the battery module (100) and the control module (200),
wherein the fire extinguishing tank (300) is mounted between the battery module (100) and the control module (200),
**characterised in that** the fire extinguishing tank (300) comprises a connection member (330) configured to electrically connect the battery module (100) to the control module (200).

2. The battery pack according to claim 1, wherein the control module (200) is detachably provided on at least one side of the battery module (100).

3. The battery pack according to claim 2, wherein tank fastening portions (C31, C32) are respectively provided at an upper end and a lower end of the fire extinguishing tank (300) to be coupled to the control module (200) and the battery module (100).

4. The battery pack according to claim 1, wherein the fire extinguishing tank (300) is located over the battery module (100) such that the fire extinguishing agent freely falls toward the battery module (100).

5. The battery pack according to claim 1, wherein the fire extinguishing agent comprises at least one of an antifreezing solution, salt water, and insulating oil.

6. The battery pack according to claim 1, wherein the fire extinguishing tank (300) comprises a rupture member (340) that is ruptured under a certain condition to allow the fire extinguishing agent to leak out when ruptured.

7. The battery pack according to claim 6, wherein the rupture member (340) is implemented as a glass bulb.

8. The battery pack according to claim 6, wherein an opening (O1) communicating with an inner space is formed in the battery module (100),
wherein at least a portion of the rupture member (340) is inserted into the opening (O1) of the battery module (100).

9. The battery pack according to claim 8, wherein a venting path (A9, A9') through which venting gas discharged from the opening (O1) is movable is formed in the fire extinguishing tank (300).

10. The battery pack according to claim 1, wherein two or more battery modules (100) are included in the battery pack,
wherein the fire extinguishing tank (300) is configured to separately inject the fire extinguishing agent into each of the two or more battery modules (100).

11. An energy storage system comprising the battery pack according to any one of claims 1 to 10.

## Patentansprüche

1. Batteriepack, umfassend:
ein Batteriemodul (100), welches eine oder mehrere Batteriezellen umfasst;
ein Steuermodul (200), welches mit dem Batteriemodul (100) verbunden ist, um das Batteriemodul (100) zu verwalten; und
einen Feuerlöschbehälter (300), welcher ein Feuerlöschmittel enthält und mit wenigstens einem aus dem Batteriemodul (100) und dem Steuermodul (200) gekoppelt ist,
wobei der Feuerlöschbehälter (300) zwischen dem Batteriemodul (100) und dem Steuermodul (200) montiert ist,
**dadurch gekennzeichnet, dass** der Feuerlöschbehälter (300) ein Verbindungselement (330) umfasst, welches dazu eingerichtet ist, das Batteriemodul (100) mit dem Steuermodul (200) elektrisch zu verbinden.

2. Batteriepack nach Anspruch 1, wobei das Steuermodul (200) an wenigstens einer Seite des Batteriemoduls (100) entfernbar bereitgestellt ist.

3. Batteriepack nach Anspruch 2, wobei Behälter-Befestigungsabschnitte (C31, C32) jeweils an einem oberen Ende und einem unteren Ende des Feuerlöschbehälters (300) bereitgestellt sind, um mit dem Steuermodul (200) und dem Batteriemodul (100) gekoppelt zu sein.

4. Batteriepack nach Anspruch 1, wobei der Feuerlöschbehälter (300) über dem Batteriemodul (100) angeordnet ist, so dass das Feuerlöschmittel frei in Richtung des Batteriemoduls (100) fällt.

5. Batteriepack nach Anspruch 1, wobei das Feuerlöschmittel wenigstens eines aus einer Gefrierschutzlösung, Salzwasser und einem Isolieröl umfasst.

6. Batteriepack nach Anspruch 1, wobei der Feuerlöschbehälter (300) ein Reißelement (340) umfasst, welches bei einer spezifischen Bedingung aufgerissen wird, um ein Auslaufen des Feuerlöschmittels zu ermöglichen, wenn es reißt.

7. Batteriepack nach Anspruch 6, wobei das Reißelement (340) als ein Glaskolben implementiert ist.

8. Batteriepack nach Anspruch 6, wobei eine Öffnung (O1), welche mit einem inneren Raum kommuniziert, in dem Batteriemodul (100) gebildet ist,
wobei wenigstens ein Abschnitt des Reißelements (340) in die Öffnung (O1) des Batteriemoduls (100) eingeführt ist.

9. Batteriepack nach Anspruch 8, wobei ein Belüftungsweg (A9, A9'), durch welchen ein Belüftungsgas bewegbar ist, welches von der Öffnung (C1) abgegeben wird, in dem Feuerlöschbehälter (300) gebildet ist.

10. Batteriepack nach Anspruch 1, wobei zwei oder mehr Batteriemodule (100) in dem Batteriepack umfasst sind,
wobei der Feuerlöschbehälter (300) dazu eingerichtet ist, das Feuerlöschmittel separat in jedes der zwei oder mehr Batteriemodule (100) zu injizieren.

11. Energiespeichersystem, umfassend den Batteriepack nach einem der Ansprüche 1 bis 10.

## Revendications

1. Bloc-batterie comprenant :
un module de batterie (100) comprenant un ou plusieurs éléments de batterie ;
un module de commande (200) connecté au module de batterie (100) pour gérer le module de batterie (100) ; et
un réservoir d'extinction d'incendie (300) contenant un agent d'extinction d'incendie et couplé à au moins l'un parmi le module de batterie (100) et le module de commande (200),
dans lequel le réservoir d'extinction d'incendie (300) est monté entre le module de batterie (100) et le module de commande (200),
**caractérisé en ce que** le réservoir d'extinction d'incendie (300) comprend un organe de connexion (330) configuré pour connecter électriquement le module de batterie (100) au module de commande (200).

2. Bloc-batterie selon la revendication 1, dans lequel le module de commande (200) est ménagé de manière détachable sur au moins un côté du module de batterie (100).

3. Bloc-batterie selon la revendication 2, dans lequel des parties de fixation de réservoir (C31, C32) sont respectivement ménagées à une extrémité supérieure et une extrémité inférieure du réservoir d'extinction d'incendie (300) pour être couplées au module de commande (200) et au module de batterie (100).

4. Bloc-batterie selon la revendication 1, dans lequel le réservoir d'extinction d'incendie (300) est situé au-dessus du module de batterie (100) de sorte que l'agent d'extinction d'incendie chute librement vers le module de batterie (100).

5. Bloc-batterie selon la revendication 1, dans lequel l'agent d'extinction d'incendie comprend au moins l'une parmi une solution antigel, de l'eau salée et une huile isolante.

6. Bloc-batterie selon la revendication 1, dans lequel le réservoir d'extinction d'incendie (300) comprend un organe de rupture (340) qui est rompu sous une certaine condition pour permettre à l'agent d'extinction d'incendie de s'échapper lorsqu'il est rompu.

7. Bloc-batterie selon la revendication 6, dans lequel l'organe de rupture (340) est mis en œuvre sous la forme d'une ampoule en verre.

8. Bloc-batterie selon la revendication 6, dans lequel une ouverture (O1) communiquant avec un espace interne est formée dans le module de batterie (100), dans lequel au moins une partie de l'organe de rupture (340) est insérée dans l'ouverture (O1) du module de batterie (100).

9. Bloc-batterie selon la revendication 8, dans lequel un chemin de purge (A9, A9'), à travers lequel un gaz de purge évacué par l'ouverture (O1) est mobile, est formé dans le réservoir d'extinction d'incendie (300).

10. Bloc-batterie selon la revendication 1, dans lequel deux modules de batterie (100) ou plus sont inclus dans le bloc-batterie,
dans lequel le réservoir d'extinction d'incendie (300) est configuré pour injecter séparément l'agent d'extinction d'incendie dans chacun des deux modules de batterie (100) ou plus.

11. Système de stockage d'énergie comprenant le bloc-batterie selon l'une quelconque des revendications 1 à 10.
